# EUROPEAN PATENT SPECIFICATION

(11) **EP 0 575 118 B1**
(45) Date of publication and mention of the grant of the patent: **23.04.1997**
(21) Application number: 93304567.6
(22) Date of filing: 11.06.1993
(51) Int. Cl.: C08F 10/02, C08F 2/34, C08F 4/654

(54) **Process for producing polyethylenes**
Verfahren zur Herstellung von Polyethylene
Procédé de préparation de polyéthylènes

(30) Priority: 15.06.1992 JP 155345/92
(43) Date of publication of application: 22.12.1993
(73) Proprietor: MITSUBISHI CHEMICAL CORPORATION, Chiyoda-ku, Tokyo-to (JP)
(72) Inventor: Ohi, Tsuyoshi, c/o Mitsubishi Petroch.Comp.Ltd., Yokkaichi-shi, Mie-Ken (JP); Souda, Masataka, c/o Mitsubishi Petroch.Comp.Ltd., Yokkaichi-shi, Mie-Ken (JP); Takahashi, Tadashi, Mitsubishi Petroch.Comp.Ltd., Yokkaichi-shi, Mie-Ken (JP)
(74) Representative: Kyle, Diana

(56) References cited:
- EP-A- 0 276 734
- EP-A- 0 302 242
- EP-A- 0 320 150
- EP-A- 0 463 406

## Description

The present invention relates to a process for producing a polyolefin. More particularly, the present invention relates to a process for producing a high molecular weight polyethylene having a wide molecular weight distribution by the vapor-phase polymerization of ethylene or ethylene and an α-olefin in the presence of a specific solid catalyst under specific polymerization conditions.

As the methods for preparing a high molecular weight polyethylene having a wide molecular weight distribution, many multi-step polymerization processes have hitherto been proposed, e.g., Japanese Patent Laid-Open Publication Nos. 166208/1981, 166209/1981, and 52309/1983.

If a high-molecular-weight polyethylene having a wide molecular-weight distribution could be prepared in a one-step vapor phase polymerization method instead of a multi-step polymerization method, such a method would be advantageous for both production and economy.

Furthermore, there has been a great demand for an economical process for producing a high molecular weight polyethylene having a wide molecular weight distribution, since it can be used as such because of its excellent properties such as moldability/formability and resistance to environmental stresscracking (ESCR) and it can also be used as a blend because of its excellent compatibility with other various polyethylenes having properties such as molecular weight and its capability of improving the polyethylenes with which it is blended in the molding/forming stability, surface roughness, ESCR and so forth of molded polyethylene products.

We have examined many factors such as catalysts and polymerization conditions which make possible the production of a high molecular weight polyethylene having a wide molecular weight distribution in a one-step vapor-phase polymerization in a single reactor and found that the anticipated objective polyethylene can be produced. The present invention has been thus accomplished.

The present invention provides the improvement in a process for polymerizing ethylene or ethylene and an α-olefin in a vapor phase in the presence of a catalyst comprising a solid catalyst component containing Mg, Ti and a halogen and an organoaluminum compound and in the presence or absence of hydrogen gas, which improvement comprises conducting the polymerization under the polymerization conditions of:
(A) the concentration of the organoaluminum compound in the polymerization zone being in the range of from 800 to 2,000 ppm relative to the amount of the polymers present in the polymerization zone;
(B) the molar ratio of hydrogen to ethylene in the polymerization zone being from 0 to 0.01; and
(C) the polymerization temperature being from 70 to 110°C,
thereby to produce a high molecular weight polyethylene having a molecular weight distribution index (Q value) of no smaller than 5.5 and a weight average molecular weight in the range of from 200,000 to 550,000.

### DETAILED DESCRIPTION OF THE INVENTION

### [Catalyst]

The catalyst used in the present invention comprises a solid catalyst component containing Mg, Ti and a halogen and an organoaluminum compound. The phrases describing the solid catalyst component "containing Mg, Ti and a halogen" and the catalyst "comprises a solid catalyst component and an organoaluminum compound" should be understood to mean that the solid catalyst component and the catalyst may upon necessity contain, in addition to the aforementioned components, supplementary components such as an electron donor, or a support comprising a solid inorganic compound, preferably an inorganic oxide. In this connection, the specific examples of these supplementary components are described below.

### Solid catalyst component

As the solid catalyst component, well-known Ziegler catalysts containing Mg, Ti and a halogen, preferably those described below, can be used.
(1) A solid catalyst component formed by contacting a Mg-Ti complex formed by the method which comprises contacting a magnesium dihalide with a titanium tetraalkoxide or a polymer thereof with a halide of Ti, Si, Al or the like (Japanese Patent Laid-Open Publication Nos. 45696/1979, 120288/1979, 21435/1980, 40745/1980, 5309/1983, 5310/1983, 12903/1984, 68312/1984, 80406/1984, 23603/1986, 285204/1986, 149905/1984, 197607/1986, 204202/1986).
   As specific methods for preparing the solid catalyst component, the following methods can be mentioned.
   (1-1) A method wherein (i) a magnesium dihalide, preferably MgCl₂, and (ii) a tetraalkoxytitanium or its polymer (containing an alkyl group having 1-8, preferably 2-6, carbon atoms), more preferably tetrabutoxytitanium, are dissolved in an inert solvent, preferably a hydrocarbon having 5-12 carbon atoms and then are reacted with (iii) a halogen compound having a halogenating ability, i.e., a halide of Ti, Si, Al or the like, particularly TiCl₄, to deposit the solid catalyst component.
   (1-2) A method wherein (A) a reaction product which has been obtained by contacting (i) a magnesium dihalide with (ii) a tetraalkoxytitanium or its polymer (containing an alkyl group having 1-8 carbon atoms, preferably 2-6 carbon atoms) and (iii) an electron donor compound such as an alcohol, preferably a monohydric alcohol having 1 - 8 carbon atoms, an organic ester derived from the aforementioned alcohol and a monobasic or dibasic carboxylic acid having 1 - 8 carbon atoms or the like, more preferably a monohydric alcohol such as butanol in the presence or absence of an inert solvent, is (B) contacted with (iv) a halogen compound having halogenating ability, preferably an inorganic halogenating agent, particularly TiCl₄.
   (1-3) A method wherein (A) a contact product of (i) a magnesium dihalide, preferably MgCl₂, (ii) a tetraalkoxytitanium or its polymer (containing an alkyl group having 1-8, preferably 2-6 carbon atoms and having a degree of polymerization of 2 - 20) and (iii) an alkylhydrogen polysiloxane having a -Si(H)(R)-O- group and having a viscosity of 1 - 100 centistokes, wherein R denotes an alkyl group containing 1-10, preferably 1-4, carbon atoms, and optionally, (iv) an electron donor compound such as a monohydric or dihydric alcohol having 1-8 carbon atoms, for example, ethanol, butanol, and 2-ethylhexanol, an organic ester derived from the aforementioned alcohol and a monobasic or dibasic carboxylic acid such as a benzoate, a phthalate or cellosolve acetate and a chloride of these carboxylic acids, is (B) contacted with (V) a halogen compound having a halogenating ability, preferably TiCl₄, SiCl₄, AlCl₃ or a mixture of these chlorides.

   Among the methods for preparing the aforementioned solid catalyst components, (1-2) and (1-3) are particularly preferred.
(2) A complex solid component comprising a titanium halide, preferably titanium tetrachloride or titanium trichloride, a magnesium halide, preferably MgCl₂ and an oxygenated product which is an ether, an ester or an alcohol, or a solid component in which the aforementioned complex solid component is supported on an inorganic porous support (Japanese Patent Laid-Open Publication
   Nos. 120992/1976, 142192/1979, 148093/1979, 120608/1980 and the like).
   Specific methods for preparing the aforementioned solid catalyst component are as follows.
(2-1) A method wherein (A) a solution [I] is obtained by contacting (i) a magnesium dihalide, preferably MgCl₂, (ii) titanium tetrachloride or titanium trichloride and a (iii) linear or cyclic ether having about 4 - 8 carbon atoms such as tetrahydrofuran or diethylether, an organic ester specified in (1-1) - (1-3) or an alcohol, and (B) a non- or poor-solvent for the contact product in the solution, such as a hydrocarbon having 5 - 10 carbon atoms, e.g., hexane is added to the solution thereby to precipitate the solid component desired;
(2-2) A method wherein the solid component is prepared by impregnating a porous inorganic oxide such as a porous silica with the solution [I] described in (2-1); and
(2-3) A method wherein the solution (I) described in (2-1) is spray dried together an inorganic oxide powder filler such as hyper fine silica (particle diameter: 0.005 - 0.02 µm), fumed silica or the like.

It is known that a problem of the disintegration of solid catalyst component particles of the Ziegler catalyst or a problem of formation fine polymer particles resulting from such pulverized catalyst particles can be solved by conducting the so-called "preliminary polymerization" in which the solid catalyst component alone or in combination with an organoaluminum compound is preliminarily brought into contact with a small amount of an olefin monomer to polymerize the same.

The solid catalyst component utilized in the present invention can be also subjected to the preliminary polymerization. In that case the olefin may be of the same type as or different from that to be polymerized in the main polymerization, and the polymerization temperature and/or polymerization pressure are generally lower than those used in the main polymerization. The amount of the polymers obtained from the preliminary polymerization is low, in the range from about 0.2 to 100g per 1 g of the solid catalyst component.

### Organoaluminum compound component

As an organoaluminum compound used in combination with the aforementioned solid catalyst component to form the catalyst of the present invention, a trialkylaluminum, inter alia one containing an alkyl group having from about 1 to 8 carbon atoms, specifically Al(CH₃)₃, Al(C₂H₅)₃, Al(i-C₄H₉)₃ and the like are preferred. Organoaluminum halides, above all those which correspond to the aforementioned trialkylaluminums in which 1, 1.5 or 2 of the alkyl groups have been substituted by a halogen atom, preferable by a chlorine atom, specifically, (CH₃)₂AlCl, (C₂H₅)₂AlCl, (C₂H₅)_{3/ 2}AlCl_{3/2} or C₂H₅AlCl₂ can be used in admixture with the aforementioned trialkylaluminum.

Among these compounds, Al(C₂H₅)₃ is particularly preferred.

### [Polymerization]

According to the present invention, polyethylene having a molecular weight distribution index [Q value = Mw/Mn, the value obtained by dividing the weight average molecular weight (Mw) determined by gel permeation chromatography by the number average molecular weight (Mn)] of 5.5 or more and a weight average molecular weight of 200,000 - 550,000 can be produced. However, it is necessary to conduct the vapor-phase polymerization under the following conditions.

### (A) The Concentration of the Organoaluminum Compound in the Polymerization Zone

The concentration of the organoaluminum compound in the polymerization zone ranges from 800 to 2,000 ppm, preferably from 900 to 1,500 ppm to the polymer quantity existing in the polymerization zone. If the concentration of the organoaluminum compound is excessively low, the effect on widening the molecular weight distribution is little; if the concentration is excessively high, the activity decreases extensively in spite of the increase in the broadening effect still being found.

In this connection, the aforementioned organoaluminum concentration can be determined by dividing the per-hour polymer output from the polymerization zone by the per-hour organoaluminum supply to the polymerization zone.

Generally, vapor-phase polymerization is conducted by continuously discharging polymers produced while continuously feeding monomers. Thus, in the stationary state, the quantity of polymers in the polymerization zone is ordinarily kept constant, whereas the relative ratio of the concentration of the organoaluminum to the amount of the polymer in the polymerization zone can upon necessity be varied with the passage of time. However, the concentration is, needless to say, to range between 800 and 2,000 ppm.

Additionally, the concentration of the organoaluminum component as the other component of the Ziegler catalyst may decrease in the polymerization zone as the polymer which contains the component is discharged from the polymerization zone. Thus it may usually be necessary to continuously supply into the polymerization zone the solid catalyst component in such an amount as to compensate for the decrease. In such a case, the amount of supply may be so determined that the ratio of the concentration of the component to the organoaluminum compound is within the desired level.

The wording "continuously" herein used is intended to include "intermittently".

### (B) Hydrogen gas Concentration in the Polymerization Zone

The molar ratio of hydrogen gas to ethylene in the polymerization zone is in the range of from 0 to 0.01. When the hydrogen concentration exceeds the aforementioned range, the molecular weight will not be sufficiently high and/or the molecular weight distribution will not be sufficiently broad.

The higher the concentration of the organoaluminum compound within the aforementioned range and the smaller the molar ratio of hydrogen gas to ethylene is, the broader is the molecular weight distribution.

### (C) Polymerization Temperature

The polymerization temperature is in the range of from 70 to 110°C, preferably from 80 to 100°C. The molecular weight will be too high when the temperature is too low, whereas the molecular weight will not be sufficiently high if the temperature is too high.

### (D) Other Polymerization Conditions

The polymerization pressure is in the range of 2 to 50 kg/cm², preferably from 10 to 35 kg/cm², and a partial pressure of ethylene of 1-20 kg/cm² is preferred.

In the range of 800 to 2,000 ppm of the concentration of the organoaluminum compound relative to the amount of the polymers retained in the polymerization zone, the per-solid component activity is ordinarily 800-50,000 g-polymer/g-solid catalyst component, and the concentration of titanium in the polymer in the polymerization zone is ordinarily in the range from 0.5 to 10 ppm. The atomic ratio of aluminum in the organoaluminum compound to titanium in the solid catalyst component (Al/Ti) is ordinarily in the range of from 5 to 2,000.

The process of the present invention is applied to the homopolymerization of ethylene or to the copolymerization of ethylene with an α-olefin. The α-olefin which can be used includes α-olefins having 3-10, preferably 3-6, carbon atoms such as propylene, butene, pentene, hexene, octene, and decene. These olefins can be used as an admixture of two or more thereof.

The ratio of the α-olefins to be copolymerized is in the range of from 0 to 20% by weight, preferably from 0 to 10% by weight.

The process of the present invention is conducted in vapor phase in one step, and it can be conducted batchwise or continuously. It is also possible to conduct the polymerization in such a way that a post-polymerization is conducted in an additional polymerization vessel for the well-known vapor phase polymerization.

In order to remove polymerization heat, a small amount of an inert liquid or liquefied hydrocarbon which is easily volatilized such as propane, butane, and hexane may upon necessity be introduced in the polymerization vessel so that it can be vaporized in the polymerization zone.

The supply of the solid catalyst component to the polymerization zone can be conducted either in the solid state or in the slurried state in an inert hydrocarbon solvent such as hexane, heptane, and decane.

### [Polyolefin products]

According to the process of the present invention, a polyethylene having a molecular weight distribution index (Q value = Mw/Mn, namely the value obtained by dividing the weight average molecular weight measured by gel permeation chromatography, Mw, by the number average molecular weight, Mn) of 5.5 or more and a weight average molecular weight in the range of from 200,000 to 550,000 can be prepared by utilizing the aforementioned polymerization conditions (A)-(C).

### Examples

### [Solid Catalyst Component A]

Into a 500-ml flask which had been thoroughly purged with nitrogen, 200 ml of n-heptane from which water and oxygen had been removed was fed. Next, 19 g (0.2 mol) of MgCl₂ and 136 ml (0.4 mol) of Ti(OₙC₄H₉)₄ were introduced into the reaction vessel, and the mixture was reacted at 95°C for 1 hour. After the temperature had been lowered to 40°C, 30 ml of methylhydrogenpolysiloxane was added, and the mixture was reacted for 3 hours. A solid product obtained was rinsed thoroughly with n-heptane. The content of Ti in the solid product was 14.7% by weight. Next, 5.2 ml of SiCl₄ was added to the solid product obtained, and reaction was carried out at 25°C for 1 hour. 19 ml of TiCl₄ was then added, and the mixture was reacted at 50°C for 2 hours and rinsed thoroughly with n-heptane. The Ti content in the solid product obtained, namely a solid catalyst component A, was 11.5% by weight.

### [Solid Catalyst Component B]

Into a 1-liter flask which had been thoroughly purged with nitrogen, 75 ml of n-heptane from which water and oxygen had been removed thoroughly, 10 g (0.1 mol) of MgCl₂ which had been ground with a ball mill for 24 hours, and 10 ml (0.03 mol) of Ti(OnC₄H₉)₄ were fed, and the mixture was reacted at 70°C for 3 hours. A mixture of 5.4 ml of n-butanol and 5.4 cc of n-heptane was introduced into the vessel for 10 seconds with a spray nozzle in manner such that the mixture was sprayed to form mist of droplets of a diameter of 210 µm, and the mixture was then reacted at 70°C for 1 hour. Furthermore, 0.02 mol of TiCl₄ was added and reacted at 70°C for 2 hours, and it was thoroughly rinsed with n-heptane. The solid catalyst component obtained was found to contain 10.5% by weight of Ti.

### [Preliminary polymerization of Ethylene with the Solid Catalyst Component A or B]

Into a 1.5-liter autoclave equipped with a temperature control unit and an agitating element, 800 ml of n-heptane was added. Then 2.3 g of diethylaluminum chloride, 2.3 g of triethylaluminum and 15 g of each of the solid catalyst components obtained above were added at 40°C. Polymerization was conducted while the total pressure was maintained at 1.5 kg/cm² under supplementation of ethylene consumed with a hydrogen atmosphere of 65% by volume so that 53 g of ethylene was absorbed. The preliminary polymerization productivity was 4.5, which was a ratio of (weight of solid catalyst component after preliminary polymerization)/(weight of solid catalyst component before preliminary polymerization). Each of the solid catalyst components which had undergone the preliminary polymerization was thus synthesized. After the preliminary polymerization, the solid catalyst components were respectively introduced in a 2-liter flask, rinsed thoroughly with n-heptane and dried under reduced pressure at room temperature. The solid catalyst components A and B having undergone the preliminary polymerization were obtained by this method. The solid catalyst components A and B were used for the following vapor phase polymerization reactions.

### [Solid Catalyst Component C]

Into a 500-ml flask which had been thoroughly purged with nitrogen, 200 ml of tetrahydrofuran from which water and oxygen had been removed thoroughly was fed, and 4 g of MgCl₂ and 2.5 g of TiCl₃ (type A) were then added. The mixture was stirred at 40°C for 30 minutes to form a solution. Next, 40 g of #952 SiO₂ (manufactured by DEVISON; dried at 600°C for 4 hours in nitrogen stream, average diameter of 50 µm) was added and tetrahydrofuran was purged with a nitrogen stream at 70°C. Solid particles having good fluidity were thus obtained. The tetrahydrofuran content in the solid particles was 16.5% by weight. The solid catalyst component C was used for the following vapor phase reactions.

### Examples 1-5, Comparative Examples 1-3

By using a vapor-phase polymerization device having an internal volume of 800 liter which was similar to the one described in Japanese Patent Laid-Open Publication No. 148093/1979, continuous co-polymerization of ethylene and butene was conducted at a total pressure of 20 kg/cm² and a velocity of the fluidizing gas of 0.45 m/sec under the conditions shown in Table 1 for a residence time of 3 hours at a production rate of 10 kg per hour which was controlled by proper selection of a feed rate of the aforementioned solid catalyst components A and B, both of which had undergone preliminary polymerization, and C. The weight average molecular weight and the Q value were measured by gel permeation chromatography. The results are shown in Table 1.

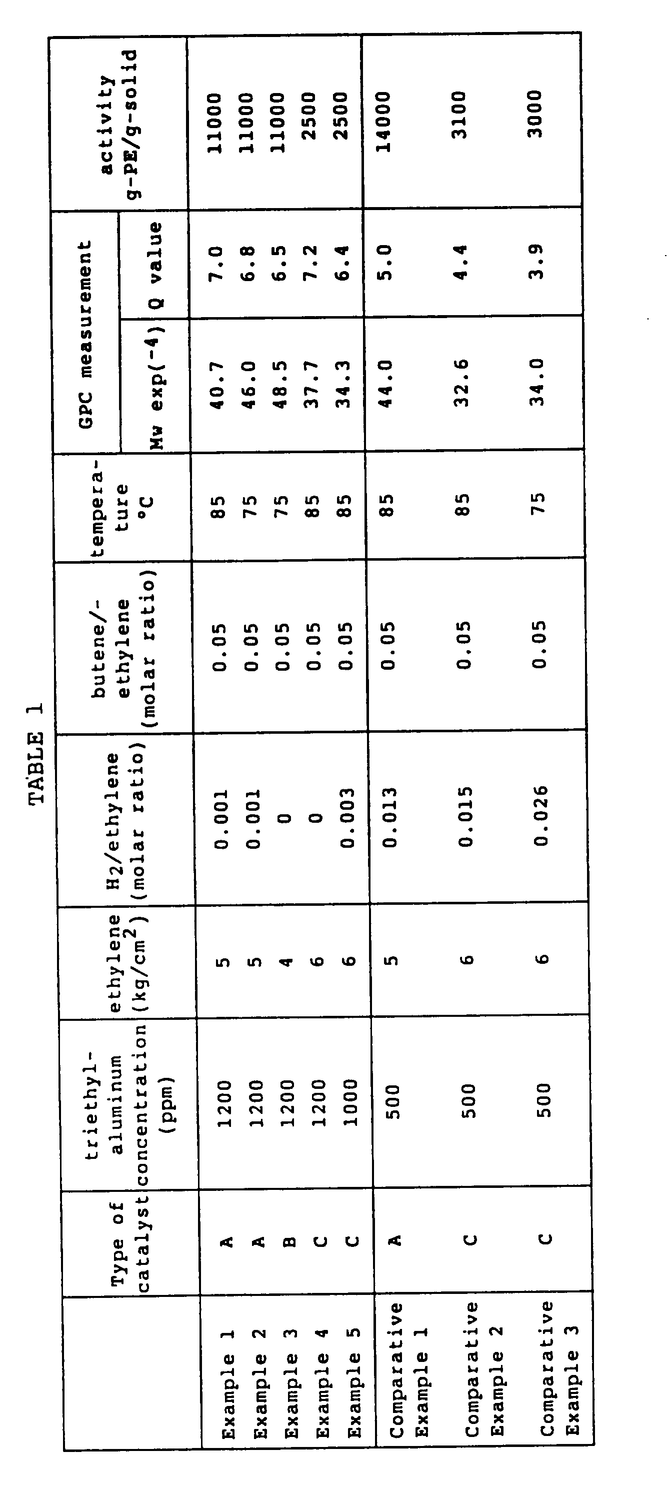

## Claims

1. A one step process for polymerizing ethylene or ethylene and an α-olefin in a vapor phase in the presence of a catalyst comprising a solid catalyst component containing Mg, Ti and a halogen and an organoaluminum compound and in the presence or absence of hydrogen gas, characterized by conducting the polymerization under the polymerization conditions of:
(A) the concentration of the organoaluminum compound in the polymerization zone being in the range from 800 to 2,000 ppm relative to the amount of the polymers present in the polymerization zone;
(B) the molar ratio of hydrogen to ethylene in the polymerization zone being from 0 to 0.01; and
(C) the polymerization temperature being from 70 to 110°C,
thereby to produce a high molecular weight polyethylene having a molecular weight distribution index (Q value) of no smaller than 5.5 and a weight average molecular weight in the range from 200,000 to 550,000.

2. A process according to claim 1, in which the solid catalyst component is a solid product formed by bringing a Mg/Ti complex formed by the method which comprises contacting a magnesium dihalide with a titanium tetraalkoxide or its polymer into contact with a halide of Ti, Si or Al.

3. A process according to claim 1, in which the solid component is a solid product formed by contacting a magnesium dihalide and a titanium tetraalkoxide or its polymer containing an alkyl group having 1-8 carbon atoms in an inert solvent and so that the contact product formed is dissolved therein reacting the contact product in solution with a halogen compound having halogenating ability to deposit the contact product in solution.

4. A process according to claim 3, in which the titanium tetraalkoxide or its polymer contains an alkyl group having 2-6 carbon atoms in the alkoxy group.

5. A process according to claim 3, in which the inert solvent is a hydrocarbon having 5-12 carbon atoms.

6. A process according to claim 3, in which the halogen compound having halogenating ability is a halide of Ti, Si or Al.

7. A process according to any of the preceding claims, in which the solid catalyst component is the solid product formed by reacting a reaction product obtained by contacting a magnesium dihalide with a titanium tetraalkoxide or its polymer containing an alkyl group having 1-8 carbon atoms and an electron donor compound with a halogen compound having halogenating ability.

8. A process according to claim 7, in which the titanium tetraalkoxide or its polymer contains an alkyl group having 2-6 carbon atoms as an alkoxy group.

9. A process according to claim 7, in which a magnesium dihalide is contacted with a titanium tetraalkoxide or its polymer in an inert solvent which is a hydrocarbon having 5-12 carbon atoms.

10. A process according to claim 7, in which the halogen compound having halogenating ability is a halide of Ti, Si or Al.

11. A process according to any one of the preceding claims, in which the solid catalyst component is a solid compound formed by reacting a contact product of a magnesium dihalide, a titanium tetraalkoxide or its polymer containing an alkyl group having 1-8 carbon atoms and an alkylhydrogenpolysiloxane having a -Si(H)(R)-O-bond wherein R represents an alkyl group having 1-10 carbon atoms with a halogen compound having halogenating ability.

12. A process according to claim 11, wherein the reaction of a magnesium dihalide, a titanium tetraalkoxide or its polymer and an alkylhydrogenpolysiloxane is conducted in the presence of an electron donor compound.

13. A process according to claim 12, in which the electron donor compound is selected from the group consisting of monohydric alcohols having 1 - 8 carbon atoms, organic esters derived from the aforementioned alcohol and a monobasic or dibasic carboxylic acid and chlorides of the carboxylic acid.

14. A process according to claim 11, in which the titanium tetraalkoxide or its polymer has an alkyl group having 2-6 carbon atoms in the alkoxy group.

15. A process according to claim 11, in which the magnesium dihalide, the titanium tetraalkoxide or its polymer and the alkylhydrogenpolysiloxane are contacted in an inert solvent having 5-12 carbon atoms.

16. A process according to claim 11, in which the halogen compound is a halide of Ti, Si or Al.

17. A process according to any one of the preceding claims, in which the solid catalyst component is a solid complex component derived from a titanium halide, a magnesium halide and an oxygenated compound selected from the group consisting of an ether, an ester or an alcohol or is a solid component in which the aforementioned solid complex component has been supported on an inorganic porous support.

18. A process according to claim 17, in which the solid catalyst component is a solid component deposited from a solution of the contact product of a magnesium dihalide, a halogen compound and the oxygenated compound by adding to the solution a non- or poor-solvent to the contact product in solution.

19. A process according to claim 18, in which the non- or poor-solvent is a hydrocarbon having 5 - 10 carbon atoms.

20. A process according to claim 17, in which the solid catalyst component is obtained by impregnating a granular porous inorganic oxide with the solution of the contact product of a magnesium halide, a halogen compound and the oxygenated compound.

21. A process according to claim 17, in which the solid catalyst component is obtained by spray-drying the solution of the contact product of a magnesium dihalide, a halogen compound and the oxygenated compound together with a powderous inorganic filler thereby to granulate.

22. A process according to any one of the preceding claims, in which the polymerization conditions of (A) is 900 to 1500 ppm, and (C) is 80 to 100°C.

23. A process according to any one of the preceding claims, in which the solid catalyst component containing Mg, Ti and a halogen has undergone preliminary polymerization.

## Patentansprüche

1. Einstufenverfahren zur Polymerisation von Ethylen oder von Ethylen und einem α-Olefin in einer Dampfphase in Gegenwart eines Katalysators umfassend eine Feststoftkatalysatorkomponente enthaltend Mg, Ti und ein Halogen und eine aluminiumorganische Verbindung in oder Abwesenheit von Wasserstoff, dadurch gekennzeichnet, daß die Polymerisation unter folgenden Bedingungen durchgeführt wird:
(A) die Konzentration der aluminiumorganischen Verbindung in der Polymerisationszone liegt im Bereich von 800 bis 2000 ppm bezogen auf den Anteil des in der Polymerisationszone vorhandenen Polymeren:
(B) das teilverhältnis von Wasserstoff zu Ethylen in der Polymerisationszone liegt zwischen 0 und 0,01;
(C) die Polymerisationstemperatur liegt zwischen 70 und 110°C.
damit man ein hochmolmassengewichtiges Polyethylen erhält mit einem Molmassenverteilungsindex (Q-Wert) nicht kleiner als 5,5 und einem Gewichtsmittel der Molmasse im Bereich von 200000 bis 550000.

2. Verfahren nach Anspruch 1. in dem die Feststoffkatalysatorkomponente ein Feststoffprodukt ist, das durch Inkontaktbringung eines Mg-Ti-Komplexes geformt durch das Verfahren umfassend die Kontaktierung eines Magnesiumdihalogenids mit einem Titantetraalkoxid oder einem Polymeren desselben mit einem Halogenid von Ti, Si oder Al.

3. Verfahren nach Anspruch 1, in dem die Feststoffkatalysatorkomponente ein Feststoffprodukt ist, erhalten durch Kontaktierung eines Magnesiumdihalogenids und eines Titantetraalkoxids oder eines Polymeren desselben enthaltend eine C₁- bis C₈-Alkylrest in einem inerten Lösungsmittel derart, daß das gebildete Kontaktprodukt darin gelöst ist, wobei das Kontaktprodukt in Lösung mit einer Halogenverbindung mit halogenierender Fähigkeit umgesetzt wird, um das Kontaktprodukt in Lösung auszuscheiden.

4. Verfahren nach Anspruch 3, in dem das Titantetraalkoxid oder das Polymere desselben einen C₂- bis C₆-Alkylrest innerhalb des Alkoxyrest enthält.

5. Verfahren nach Anspruch 3, in dem das inerte Lösungsmittel ein C₅- bis C₁₂-Kohlenwasserstoff ist.

6. Verfahren nach Anspruch 3, in dem die Halogenverbindung mit halogenierender Fähigkeit ein Halogenid von Ti, Si oder Al ist.

7. Verfahren nach einem der vorstehenden Ansprüche, in dem die Feststoffkatalysatorkomponente das Feststoffprodukt ist. das durch Umsetzen eines Reaktionsprodukts. erhalten durch Kontaktierung eines Magnesiumdihalogenids mit einem Titantetraalkoxid oder dessen Polymeren enthaltend einen C₁-bis C₈-Alkyrest und einem elektronendonator mit einer Halogenverbindung die halogenierende Fähigkeit aufweist.

8. Verfahren nach Anspruch 7, in dem das Titantetraalkoxid oder das Polymere desselben einen C₂- bis C₆-Alkylrest als einen Alkoxyrest enthält.

9. Verfahren nach Anspruch 7, in dem ein Magnesiumdihalogenid mit einem Titantetraalkoxid oder einem Polymeren desselben in einem inerten Lösungsmittel zur Einwirkung gebracht wird, das ein C₅- bis C₁₂-Kohlenwasserstoff ist.

10. Verfahren nach Anspruch 7. in dem die Halogenverbindung mit halogenierender Fähigkeit ein Halogenid von Ti, Si oder Al ist.

11. Verfahren nach einem der vorhergehenden Ansprüche, in dem die Feststoffkatalysatorkomponente eine Feststofkomponente ist, die durch Umsetzen eines Kontaktprodukts von Magnesiumdihalogenid, eines Titantetraalkoxids oder eines Polymeren desselben enthaltend einem C₁- bis C₈-Alkylrest und ein Alkylhydrogenpolysiloxan mit einer -Si(H)(R)-O-Verbindung mit R als C₁-bis C₁₀-Alkylrest mit einer Halogenverbindung mit halogenierender Fähigkeit erhalten ist.

12. Verfahren nach Anspruch 11, wonach die Reaktion eines Magnesiumdihalogenids, eines Titantetraalkoxids oder dessen Polymeren und eines Alkylhydrogenpolysiloxans in Gegenwart eines Elektronendonators durchgeführt wird.

13. Verfahren nach Anspruch 12, in dem der Elektronendonator ausgewählt ist aus der Gruppe bestehend aus einwertigen C₁- bis C₈-Alkoholen, organischen Esterderivaten der genannten der genannten Alkohole und einer einbasischen oder zweibasischen Carbonsäure und Chloriden der Carbonsäure.

14. Verfahren nach Anspruch 1 1, in dem das Titantetraalkoxid oder dessen Polymer einen C₂- bis C₆-Alkylrest innerhalb des Alkoxyrests hat.

15. Verfahren nach Anspruch 11, in dem das Magnesiumdihalogenid, das Titantetraalkoxid oder dessen Polymeres und das Alkylhydrogenpolysiloxan in einem inerten Lösungsmittel mit 5 bis 12 Kohlenstoffatomen zur gegenseitigen Einwirkung gebracht werden.

16. Verfahren nach Anspruch 11, in dem die Halogenverbindung ein Halogenid von Ti, Si oder Al ist.

17. Verfahren nach einem der vorstehenden Ansprüche, in dem die Feststoftkatalysatorkomponente eine Feststoffkomplexkomponente ist, die abgeleitet ist von einem Titanhalogneid, einem Magnesium-halogenid und einer oxygenierten Verbindung ausgewählt aus der Gruppe bestehend aus einem Ether, einem Ester oder einem Alkohol, oder eine Feststoftkomponente ist, in der die genannte Feststoffkomplexverbindung auf einem anorganischen porösen Träger gehalten ist.

18. Verfahren nach Anspruch 17, in dem die Feststoffkatalysatorkomponente eine Feststofkomponente ist, die aus einer Lösung des Kontaktprodukts eines Magnesiumdihalogenids, einer Halogenverbindung und der oxygenierten Verbindung durch Zusatz eines Nichtlösiingsmittels oder Schlechtlösungsmittels zu dem Kontaktprodukt in Lösung ausgefällt ist.

19. Verfahren nach Anspruch 18, in dem das Nichtlösungsmittel oder Schlechtlösungsmittel ein C₅- bis C₁₀-Kohlenwasserstoff ist.

20. Verfahren nach Anspruch 17, in dem die Feststoffkatalysatorkomponente durch Imprägnierung eines granularen porösen anorganischen Oxids mit der Lösung des Kontaktprodukts eines Magnesiumhalogenids, einer Halogenverbindung und der oxygenierten Verbindung erhalten wird.

21. Verfahren nach Anspruch 17, in dem die Feststoffkatalysatorkomponente durch Sprühtrocknung der Lösung des Kontaktprodukts eines Magnesiumdihalogenids, einer Halogenverbindung und der oxygenierten Verbindung zusammen mit einem pulverförmigen anorganischen Füllstoff zwecks Granulierung erhalten wird.

22. Verfahren nach einem der vorstehenden Ansprüche, in dem die Polymerisationsbedingungen (A) 900 bis 1500 ppm und (C) 80 bis 100 °C betragen.

23. Verfahren nach einem der vorstehenden Ansprüche, in dein die Feststoffkatalysatorkomponente enthaltend Mg, Ti und ein Halogen einer Vorpolymerisation unterzogen wird.

## Revendications

1. Procédé en une étape pour polymériser l'éthylène, ou l'éthylène et une α-oléfine, en phase vapeur en présence d'un catalyseur comprenant un constituant catalyseur solide contenant Mg, Ti et un halogène et un composé organique de l'aluminium, et en présence ou en l'absence d'hydrogène gazeux, caractérisé en ce qu'il consiste à mettre en oeuvre la polymérisation dans les conditions de polymérisation suivantes :
(A) la concentration du composé organique de l'aluminium dans la zone de polymérisation est comprise entre 800 et 2000 ppm par rapport à la quantité des polymères présents dans la zone de polymérisation ;
(B) le rapport en moles de l'hydrogène à l'éthylène dans la zone de polymérisation est de 0 à 0,01 ; et
(C) la température de polymérisation est comprise entre 70 et 110°C,
de façon à produire un polyéthylène à grande masse moléculaire ayant un indice de distribution des masses moléculaires (indice Q) non inférieur à 5,5, et une masse moléculaire moyenne en masse comprise dans l'intervalle de 200 000 à 550 000.

2. Procédé selon la revendication 1, dans lequel le constituant catalyseur solide est un produit solide formé par mise en contact, avec un halogénure de Ti, de Si ou d'Al, d'un complexe Mg/Ti formé par le procédé qui comprend la mise en contact d'un dihalogénure de magnésium avec un tétraalkylate de titane ou son polymère.

3. Procédé selon la revendication 1, dans lequel le constituant solide est un produit solide formé par mise en contact d'un halogénure de magnésium et d'un tétraalkylate de titane ou de son polymère contenant un groupe alkyle ayant de 1 à 8 atomes de carbone dans un solvant inerte, et de façon que le produit de contact formé y soit dissous, en faisant réagir le produit de contact en solution avec un composé halogéné ayant un pouvoir d'halogénation, pour déposer le produit de contact en solution.

4. Procédé selon la revendication 3, dans lequel le tétraalkylate de titane ou son polymère contient un groupe alkyle ayant de 2 à 6 atomes de carbone dans le groupe alcoxy.

5. Procédé selon la revendication 3, dans lequel le solvant inerte est un hydrocarbure ayant de 5 à 12 atomes de carbone.

6. Procédé selon la revendication 3, dans lequel le composé halogéné ayant un pouvoir d'halogénation est un halogénure de Ti, de Si ou d'Al.

7. Procédé selon l'une quelconque des revendications précédentes, dans lequel le constituant catalyseur solide est le produit solide formé par la réaction d'un produit de réaction obtenu par mise en contact d'un dihalogénure de magnésium avec un tétraalkylate de titane ou son polymère contenant un groupe alkyle ayant de 1 à 8 atomes de carbone et un composé donneur d'électrons, avec un composé halogéné ayant un pouvoir d'halogénation.

8. Procédé selon la revendication 7, dans lequel le tétraalkylate de titane ou son polymère contient un groupe alkyle ayant de 2 à 6 atomes de carbone en tant que groupe alcoxy.

9. Procédé selon la revendication 7, dans lequel un dihalogénure de magnésium est mis en contact avec un tétraalkylate de titane ou son polymère dans un solvant inerte, qui est un hydrocarbure ayant de 5 à 12 atomes de carbone.

10. Procédé selon la revendication 7, dans lequel le composé halogéné ayant un pouvoir d'halogénation est un halogénure de Ti, de Si ou d'Al.

11. Procédé selon l'une quelconque des revendications précédentes, dans lequel le constituant catalyseur solide est le produit solide formé par la réaction d'un produit de contact d'un dihalogénure de magnésium, d'un tétraalkylate de titane ou de son polymère contenant un groupe alkyle ayant de 1 à 8 atomes de carbone, et d'un alkylhydrogénopolysiloxanne ayant une liaison -Si(H)(R)-O- où R représente un groupe alkyle ayant de 1 à 10 atomes de carbone, avec un composé halogéné ayant un pouvoir d'halogénation.

12. Procédé selon la revendication 11, dans lequel la réaction d'un dihalogénure de magnésium, d'un tétraalkylate de titane ou de son polymère et d'un alkylhydrogénopolysiloxanne est mise en oeuvre en présence d'un composé donneur d'électrons.

13. Procédé selon la revendication 12, dans lequel le composé électrodonneur est choisi dans l'ensemble constitué des monoalcools ayant de 1 à 8 atomes de carbone, les esters organiques qui dérivent de l'alcool mentionné ci-dessus et d'un acide mono- ou dicarboxylique et de chlorures de l'acide carboxylique.

14. Procédé selon la revendication 11, dans lequel le tétraalkylate de titane ou son polymère possède un groupe alkyle ayant de 2 à 6 atomes de carbone dans le groupe alcoxy.

15. Procédé selon la revendication 11, dans lequel le dihalogénure de magnésium, le tétraalkylate de titane ou son polymère et l'alkylhydrogénopolysiloxanne sont mis en contact dans un solvant inerte ayant de 5 à 12 atomes de carbone.

16. Procédé selon la revendication 11, dans lequel le composé halogéné est un halogénure de Ti, de Si ou d'Al.

17. Procédé selon l'une quelconque des revendications précédentes, dans lequel le constituant catalyseur solide est un constituant complexe solide dérivé d'un halogénure de titane, d'un halogénure de magnésium ou d'un composé oxygéné choisi parmi l'ensemble constitué d'un éther, d'un ester ou d'un alcool, ou est un constituant solide dans lequel le constituant complexe solide mentionné ci-dessus a été supporté par un support poreux minéral.

18. Procédé selon la revendication 17, dans lequel le constituant catalyseur solide est un constituant solide déposé à partir d'une solution du produit de contact d'un dihalogénure de magnésium, d'un composé halogéné et du composé oxygéné, par addition, à la solution, d'un non-solvant ou d'un solvant médiocre du produit de contact en solution.

19. Procédé selon la revendication 18, dans lequel le non-solvant ou le solvant médiocre est un hydrocarbure ayant de 5 à 10 atomes de carbone.

20. Procédé selon la revendication 17, dans lequel le constituant catalyseur solide est obtenu par imprégnation d'un oxyde minéral poreux granulaire avec une solution du produit de contact d'un halogénure de magnésium, d'un composé halogéné et du composé oxygéné.

21. Procédé selon la revendication 17, dans lequel le constituant catalyseur solide est obtenu par séchage par atomisation de la solution du produit de contact d'un dihalogénure de magnésium, d'un composé halogéné et du composé oxygéné, avec une charge minérale en poudre, de façon à provoquer une granulation.

22. Procédé selon l'une quelconque des revendications précédentes, dans lequel les conditions de polymérisation (A) sont de 900 à 1500 ppm, et (C) de 80 à 100°C.

23. Procédé selon l'une quelconque des revendications précédentes, dans lequel le constituant catalyseur solide contenant Mg, Ti et un halogène a subi une polymérisation préliminaire.
